# EUROPEAN PATENT SPECIFICATION

(11) **EP 2 135 699 B1**
(45) Date of publication and mention of the grant of the patent: **27.06.2018**
(21) Application number: 08738660.3
(22) Date of filing: 07.03.2008
(51) Int. Cl.: B23K 9/23, B23K 9/00, B23K 9/167, C22C 38/00, C22C 38/50, F24H 9/00, B23K 101/12, B23K 103/04

(54) **HOT WATER CONTAINER**
WARMWASSERBEHÄLTER
CONTENANT D'EAU CHAUDE

(30) Priority: 09.03.2007 JP 2007060986
(43) Date of publication of application: 23.12.2009
(73) Proprietor: NISSHIN STEEL CO., LTD., Chiyoda-ku Tokyo 100-8366 (JP)
(72) Inventor: ADACHI, Toshiro, Shunan-shi Yamaguchi 746-0023 (JP); NONOMURA, Akihiro, Shunan-shi Yamaguchi 746-0023 (JP); YAMAMOTO, Osamu, Shunan-shi Yamaguchi 746-0023 (JP); TOMIMURA, Kouki, Shunan-shi Yamaguchi 746-0023 (JP)
(74) Representative: Carstens, Dirk Wilhelm
(86) International application number: PCT/JP2008/054678
(87) International publication number: WO 2008/111656

(56) References cited:
- JP-A- H06 279 951
- JP-A- 2007 009 290

## Description

### TECHNICAL FIELD

The present invention relates to a welded structure-having, stainless steel-made hot water tank suitable for electric water heaters, hot water tanks and others. A hot water tank according to the preamble of claim 1 is known from JP 2007009290 A.

### BACKGROUND ART

Ferrite stainless steel, SUS444 (LowC, LowN, 18Cr-2Mo-Nb,Ti) is mainly used for the material for hot water tanks for electric water heaters, hot water tanks, etc. A hot water tank is required to be resistant to pressure on a level of water supply pressure or so, and therefore, its mainstream is a welded structure of such that curved tabular members, as referred to as upper and lower plates, are bonded by welding to both ends of a cylindrical tabular member, as referred to as a shell plate. However, the corrosion resistance of stainless steel is obstructed by welding, and even in a hot water environment of tap water that is an aqueous solution of a diluted chloride, the weld zone thereof (mainly the heat-affected zone) may be corroded. It may be considered that the reason for corrosion resistance depression may be related with the formation of oxide scale in welding. Regarding the corrosion mechanism, pitting corrosion is readily passivated and grows little; but, in general, crevice corrosion is hardly passivated and may often penetrate through a plate to cause a leak of water.

In general, most hot water tanks are so designed that the upper end plate (or called as tank head) and the lower end plates (or called as tank bottom) are TIG-welded to the shell plate. In the weld zone between the shell plate and end plates, in general, the two are so welded that the outer surface of the end plate is fitted to the inner surface of the shell plate. In the weld zone, formation of a weld crevice is inevitable in the area in which the inner surface of the tank is kept in contact with hot water. On the torch side in TIG welding, the welded part is sealed up with Ar gas and is therefore prevented from being oxide scale formation thereon, and the corrosion resistance depression in the area is almost on a level of no problem for use as hot water tanks. On the other hand, on the side opposite to the torch (hereinafter this may be referred to as "back side in welding"), the corrosion resistance may lower owing to the formation of oxide scale thereon unless otherwise any specific method of sealing it up with Ar gas or the like is taken. Therefore, in assembling a hot water tank, in principle, the constitutive members are so welded that the inner surface of the tank could be on the torch side; however, for forming a closed tank, the outer surface of the tank must be inevitably on the torch side in the final stage of welding for mirror installation. Accordingly, in this case, the inner surface of the tank should be the back side in welding, and therefore sealing of the welded back side with an inert gas, or that is, back gas sealing is inevitable.

However, the process of back gas sealing is an extremely troublesome operation in producing a hot water tank. Specifically, a hot water tank is provided with a socket (mouthpiece) to be a watercourse and, as the case may be, a flange for inserting therethrough electric communication members such as a heater, a sensor and others, and cords to be connected to them; but it is unexpectedly difficult and troublesome to insert and operate the tool and the gas hose for back gas sealing into the tank through the narrow holes of those socket and flange. Accordingly, as the case may be, an additional flange may be provided only for carrying out the back gas sealing operation. In addition, it may be necessary to consume a large quantity of an inert gas such as Ar or the like. From these reasons, back gas sealing is a factor of increasing the production cost of hot water tanks.

JP 54 72 711 A discloses a structure of a hot water tank in which crevice corrosion is prevented by controlling the depth of the cap (upper end plate) to be inserted into the cylinder (shell body) to be at most 20 mm. JP 5 70 899 A discloses ferrite stainless steel excellent in corrosion resistance at the welded part thereof, to which are added Ti and Al for reducing the oxidation loss of Cr in welding. JP 2006 97 908 A describes welding of a flange to the shell plate of hot water tank, in which a seal gas is kept supplied to the weld zone including the weld bead and the weld heat-affected zone until the temperature of the weld zone could lower to 400°C or below.

Attention is also drawn to JP 2007 009 290 A, which discloses a hot water tank having a strength in the weld zones suitable for use as an aqueduct direct connection type. The hot water tank is constructed by the weld-bonding of ferritic stainless steel sheet members each having a composition comprising, by mass, 0.025% or less of C, more than 0.6 to 2% Si, 1% or less of Mn, 0.045% or less of P, 0.01% or less of S, 0.6% or less of Ni, 17 to 23% of Cr, 0.5 to 1.7% of Mo, 0.05 to 0.5% of Nb, 0.05 to 0.3% of Ti, 0.6% or less of Cu, 0.02 to 0.3% of Al and 0.025% or less of N, and the balance Fe with inevitable impurities, and the parts in contact with hot water in the weld zones have a gap structure.

### PROBLEMS THAT THE INVENTION IS TO SOLVE

As described in the above, in welding in assembling a hot water tank, back sealing is indispensable on the inner surface side of the tank for securing corrosion resistance, and this results in increasing the production cost for hot water tanks. Reducing the area of the weld crevice as in JP 54 72 711 A may be advantageous for enhancing crevice corrosion resistance; however, when the steel disclosed in this reference is used and when the inner surface of the hot water tank to be constructed is the back side in welding, then the steel material requires back gas sealing for preventing the reduction in the corrosion resistance thereof, and the production cost for the hot water tank is inevitably high. The technique of JP 5 70 899 A is also on the presumption of Ar gas back sealing. JP 2006 97 908 A discloses a method of carefully using a sealing gas in welding a shell plate and a flange. Also in this case, for securing high corrosion resistance in the weld zone between the end plate and the shell plate, back gas sealing is necessary like in the above, and the production costs for hot water tanks is, after all, still high.

Given the current situation as above, an object of the present invention is to provide a hot water tank capable of exhibiting excellent corrosion resistance in the weld zone thereof, not accompanied by cost increase owing to back gas sealing.

### MEANS FOR SOLVING THE PROBLEMS

The above-mentioned object can be attained by a hot water tank as set forth in claim 1. Further embodiments are inter alia disclosed in the dependent claims. The hot water tank in particular has, on the inner surface thereof, a back bead formed by TIG-welding of steel members having a Cr content of from more than 21 to 25 % by mass to each other with no back gas sealing, wherein the Cr concentration in the steel basis material in the area having oxide scale soluble in an aqueous chloride solution, as formed therein in the heat-affected zone (HAZ) on the TIG-welded back side thereof, is at least 16 % by mass in the depth region of at least 10 nm from the steel basis material/oxide scale interface.

Especially in the invention, there is provided a hot water tank having, on the inner surface thereof, a back bead formed by TIG-welding with no back gas sealing of steel members to each other having a composition comprising, % by mass, C: at most 0.025 %, Si: at most 1 %, Mn: at most 1 %, P: at most 0.045 %, S: at most 0.01 %, Ni: from 0.1 to 1 %, Cr: from more than 21 to 25 %, Mo: from 0.1 to 2 %, Al: from 0.02 to 0.3 %, N: at most 0.025 %, and containing at least one of Ti: from 0.05 to 0.4 % and Nb: from 0.05 to 0.5 %, and optionally containing Cu: at most 1 %, with the balance of Fe and inevitable impurities. In the hot water tank, the Cr concentration in the steel basis material in the area where oxide scale soluble in an aqueous chloride solution is formed in the heat-affected zone (HAZ) on the TIG-welded back side thereof is at least 16 % by mass in the depth region of at least 10 nm from the steel basis material/oxide scale interface. The hot water tank has oxide scale having a Cr concentration of at least 30 % by mass on the steel material surface near the back bead. The "back bead" as referred to herein means a weld bead surface appearing in the area not exposed to the arc from a torch.

Of the hot water tank of the type, a hot water tank having a structure so designed as not to have a flange not for a watercourse for water (including hot water) and not for an insert port for electric communication members is an especially favorable object of the present invention. The "flange" as referred to herein includes a socket (mouthpiece).

The invention has made it possible to provide a low-cost hot water tank having excellent corrosion resistance, for which back gas sealing on the inner surface thereof is omitted. The hot water tank may have a simple structure not having a flange that is unnecessary in its use. After welded, the tank does not require burn removal (oxide scale removal) but may be directly used as it has been just welded. The corrosion resistance of the weld zone is enhanced more than that in conventional hot water tanks formed of SUS444. Accordingly, the present invention provides a hot water tank of extremely high cost performance.

### BRIEF DESCRIPTION OF THE DRAWINGS

Fig. 1 is a drawing-substitute photograph showing the outward appearance of a TIG-welded back side with no back gas sealing, and a view schematically showing the cross section of the positional relationship corresponding to it.
Fig. 2 is a graph showing the relationship between the maximum ultimate temperature in the TIG-welded back side with no back gas sealing and the largest erosion depth in the weld test piece after a dipping test.
Fig. 3 is a view schematically showing the analyzed positions in TEM-EDX of the cross section of the weld heat-affected zone of a sample for analysis of steel X and steel Y.
Fig. 4 is a graph illustrating the relationship between the distance from the steel basis material/oxide scale interface and the Cr concentration in the site having a maximum ultimate temperature of 500°C of steel X and steel Y.
Fig. 5 is a view schematically showing the structure of a TIG weld crevice test piece.
Fig. 6 is a view schematically showing the dipping test method in Example 2.
Fig. 7 is a view schematically showing the structure of the test shell plate used in Example 3.
Fig. 8 is a view schematically showing a corrosion resistance test method on an actual tank.

### PREFERRED EMBODIMENTS OF THE INVENTION

Heretofore it is known that, on the TIG-welded back side with no back gas sealing of ferrite stainless steel, the corrosion resistance in the area having oxide scale in the heat affected zone (HAZ) lowers therefore bringing about troubles of crevice corrosion, etc. However, the present inventors' detailed studies have revealed that the TIG-welded back with no back gas sealing of ferrite stainless steel having a relatively high Cr content and having high corrosion resistance is not corroded in the entire area having oxide scale formed therein, but is corroded only in a predetermined area of the weld heat-affected zone thereof. Heretofore, in general, it has been considered that the corrosion resistance reduction in the weld heat-affected zone of stainless steel may be caused by consumption of Cr in the steel basis material (oxidation loss) to form a Cr-deficient layer in the surface of the steel basis material. However, the present inventors' detailed investigations of the composition of the stainless steel basis material just below the weld oxide scale have revealed that the Cr concentration in the area nearer to the steel basis material/oxide scale interface (that is, the area at the shallower position) tends to lower more, but when the Cr concentration in the depth region of at least 10 nm from the steel basis material/oxide scale interface is at least 16 % by mass, then the crevice corrosion that is problematic in a hot water environment of tap water can be evaded. In other words, in observation of the extremely micro-region on an order of nanometer, it has been revealed that the formation of the so-called Cr-deficient layer in the surface layer of the steel basis material does not directly result in the problem of corrosion resistance reduction, but even though such a Cr-deficient layer is formed, the crevice corrosion resistance in a hot water environment can be secured so far as a Cr concentration of at least 16 % by mass can be maintained except in the ultra-thin surface layer area of less than 10 nm from the steel basis material/oxide scale interface.

Hereinafter examples of a steel X having a Cr content of about 22 % and a steel Y having a Cr content of about 18 % are described with respect to the relationship between the maximum ultimate temperature and the corrosion resistance in the weld heat-affected zone on the TIG-welded back side, and to the Cr concentration analysis of the steel basis material surface area and the oxide scale.

### [Relationship between the maximum ultimate temperature and the corrosion resistance in weld heat-affected zone]

Cold-rolled annealed steel sheets (sheets finished by acid pickling) having a steel composition shown in Table 1 and having a thickness of 1 mm were prepared. The steel X is ferrite stainless steel having a composition defined in the invention; and the steel Y is one having a lower Cr content than the former (sheet corresponding to SUS444). These were individually welded in a mode of TIG fusion welding without filler metal (operation for forming a weld bead on one sheet, as simulated for sheet-to-sheet welding) under the condition of no back gas sealing, thereby preparing a test piece of 30 x 40 mm square having a weld bead at the center thereof. In this case, the weld bead is parallel to the short side of the test piece, and has a weld heat-affected zone (HAZ) on both sides thereof. The test piece was dipped in a test solution prepared by adding 10 ppm of Cu²⁺ (conditioned with cupric chloride) to an aqueous 1000 ppm Cl⁻ solution, at 80°C for 72 hours.

**Table 1**

| Steel | Chemical Ingredients (mas.%) | | | | | | | | | | | | |
|---|---|---|---|---|---|---|---|---|---|---|---|---|---|
| | C | Si | Mn | P | S | Ni | Cr | Mo | Cu | Ti | Nb | Al | N |
| X | 0.006 | 0.20 | 0.18 | 0.033 | 0.002 | 0.05 | 22.1 | 1.04 | 0.04 | 0.17 | 0.20 | 0.07 | 0.014 |
| Y | 0.004 | 0.25 | 0.07 | 0.034 | 0.001 | 0.06 | 18.3 | 1.89 | 0.02 | - | 0.34 | 0.06 | 0.011 |

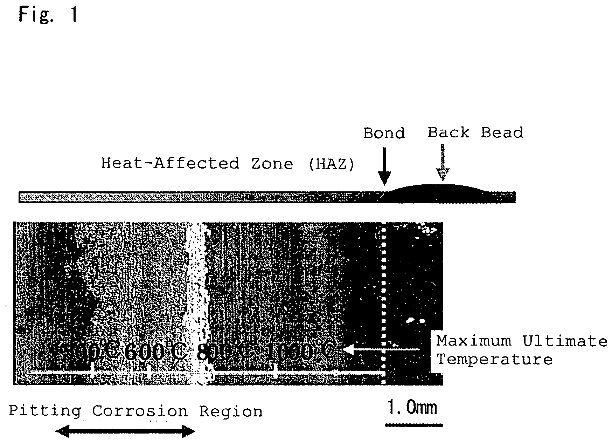

Fig. 1 shows a photograph of the outward appearance of the weld back surface of the steel X and a cross-sectional view of the positional relationship corresponding to it. On the photograph, given is the scale of the maximum ultimate temperature of the weld heat-affected zone. The maximum ultimate temperature indicates the temperature distribution measured by fitting thermocouples to various positions on the stainless steel surface. The maximum ultimate temperature of the weld heat-affected zone lowered at the site remoter from the weld metal zone (bead), and at the site spaced by 2 mm from the weld bond, it was 1000°C, and was 500°C at the site spaced by 5 mm. Naturally, the relationship between the distance from the weld bond and the maximum ultimate temperature varies depending on the welding condition; however, since the TIG welding condition range for ferrite stainless steel is relatively narrow, and for those having the same thickness, the temperature distribution in the weld heat-affected zone may be nearly the same. Specifically, in those having a predetermined thickness, the maximum ultimate temperature may be determined almost on the basis of the distance from the weld bond.

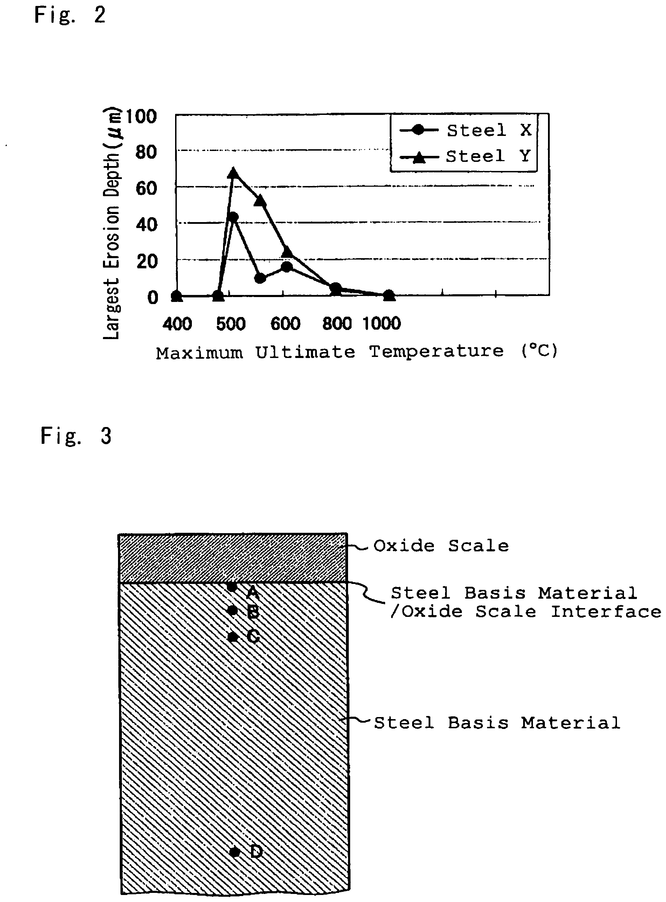

In the weld test piece after the dipping test, the oxide scale was found to melt or peel in the solution at the position at which the maximum ultimate temperature was around 800°C or from 400 to 600°C; and in the region where the temperature was a little higher than 800°C, the film did neither melt nor peel. Observing the steel basis material with an optical microscope revealed little erosion by pitting corrosion at the position at 800°C. Generation and growth of pitting corrosion was recognized at the position at 400 to 600°C. Fig. 2 shows the relationship between the maximum ultimate temperature and the largest erosion depth. For the largest erosion depth, the pitting corrosion depth is measured according to a focal depth method using an optical microscope, and the deepest pitting corrosion depth at different positions at the same temperature is the largest erosion depth. Both in the steel X and in the steel Y, the largest erosion depth peak was at a maximum ultimate temperature of around 500°C. However, in the steel X, the largest erosion depth was shallower, and the corrosion resistance in the weld heat-affected zone of the steel X was excellent. To that effect, it has been found that the pitting corrosion in the TIG welded region occurs in the site exposed to heat at 400 to 600°C in the weld heat-affected zone, and that the erosion growth differs between different steel species.

### [Cr concentration analysis of steel basis material surface area and oxide scale]

Thin-film samples were prepared from the above-mentioned welded test piece, of which the cross section of the oxide scale and the steel basis material surface area (around the interface to the oxide scale) could be observed with TEM (transmission electronic microscope) at the position of 2 mm (corresponding to a maximum ultimate temperature of 1000°C) from the weld bond thereof and at the position of 5 mm (corresponding to a maximum ultimate temperature of 500°C) from it; and these were analyzed for the composition through TEM-EDX (Hitachi High-Tech Science Systems' HF2000).

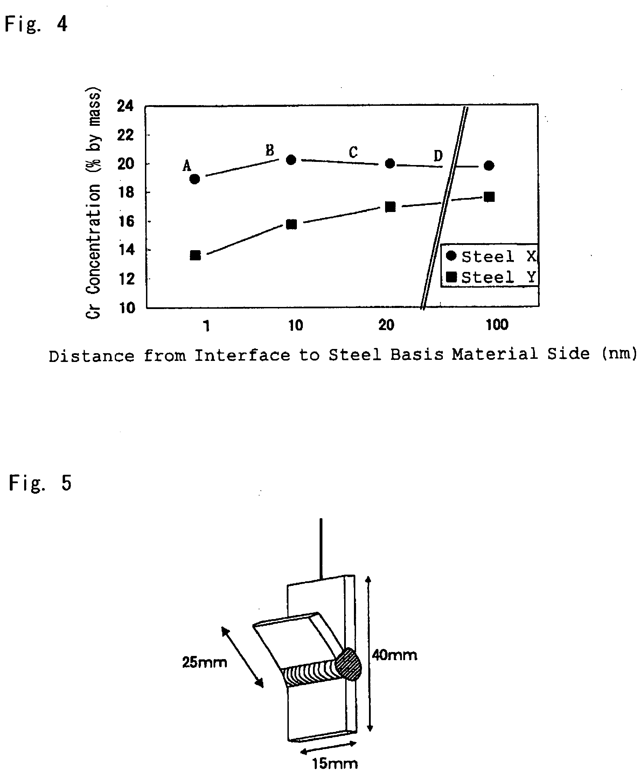

The steel basis material was analyzed at a depth position of 1 nm (just below the oxide scale), 10 nm, 20 nm and 100 nm from the steel basis material/oxide scale interface. Fig. 3 graphically shows the analyzed positions in the steel basis material sample for analysis. Fig. 4 shows found data at the site corresponding to a maximum ultimate temperature of 500°C.

As is known from Fig. 4, the Cr concentration in the steel basis material surface area corresponding to a maximum ultimate temperature of 500°C greatly lowered at a depth of 1 nm (that is, just below the oxide scale) from the steel basis material/oxide scale interface both in the steel X and in the steel Y; and in the depth region of from 10 to 100 nm, the Cr concentration change (concentration gradation) was smaller than in the ultra-surface area region of from 1 to 10 nm. At a depth of 1 nm, the Cr concentration was about 19 % by mass in the steel X, and was lower than 14 % by mass in the steel Y. At a depth of 10 nm, the Cr concentration was still about 20 % by mass in the steel X, but was lower than 16 % by mass in the steel Y. It may be considered that Cr concentration difference in the steel basis material surface layer between the steel X and the steel Y may result from the Cr content difference in steel (that is, between different steel species). The Cr concentration in the steel basis material surface layer area at the site corresponding to a maximum ultimate temperature of 1000°C was almost the same as that in the above-mentioned site corresponding to 500°C both in the steel X and in the steel Y.

The present inventors made detailed analysis of the steel basis material surface layer area as above, for other various steel species than the steel X and the steel Y. As a result, the inventors have found that, even though the Cr concentration reduction in the steel basis material just after the oxide scale thereon is large, the corrosion resistance in a hot water environment at the site having a depth of 10 nm can be kept on a level with no problem in point of not only the pitting corrosion resistance but also the crevice corrosion resistance thereof, so far as the Cr concentration of at least 16 % by mass is maintained at that depth. Accordingly, for increasing the corrosion resistance of the heat-affected zone on the TIG-welded back side to a level with no problem, it is important that, at the site at which the corrosion resistance reduction is the largest, or that is, at the site at which the maximum ultimate temperature is around 500°C, the Cr concentration in the steel basis material in the depth region of at least 10 nm is maintained to be at least 16 % by mass. Regarding Mo, there was found no specific phenomenon such as thickening thereof or the like in the steel basis material including the area just below the interface and around it.

On the other hand, the oxide scale was analyzed through TEM-EDX, which revealed the formation of oxide scale of mainly Fe₂O₃ at the site corresponding to a maximum ultimate temperature of 500°C, in both the steel X and the steel Y. In the oxide scale, the Cr concentration was from 1 to 23 % by mass and was low. The Cr concentration in the oxide scale as referred to herein means the proportion of Cr in the constitutive metal elements, and the found data of C and O were excluded in computing the Cr concentration. The oxide of mainly Fe₂O₃ having a low Cr concentration easily dissolve in an aqueous chloride solution; and in a hot water tank, it may be considered that the Cr concentration in the above-mentioned steel basis material surface layer area may govern the corrosion resistance in the site corresponding to a maximum ultimate temperature of 500°C.

In the site corresponding to a maximum ultimate temperature of around 1000°C, oxide scale of mainly an oxide of a type of Cr₂₋ₓFeₓO₃ having a high Cr concentration of from 30 to 84 % by mass was formed both in the steel X and in the steel Y. Even though the Cr content level differed in steel, there was found no specific difference in the Cr concentration in the oxide scale. The Cr concentration in the oxide scale as referred to herein also means the proportion of Cr in the constitutive metal elements, and the found data of C and O were excluded in computing the Cr concentration. The oxide having a high Cr concentration is chemically stable in an aqueous chloride solution such as tap water, etc. Both in the steel X and in the steel Y, there was found no pitting corrosion at all in the site, and this may be considered because the oxide scale having a high Cr concentration may function as a protective coating film. The present inventors analyzed the oxide scale of various steel species in addition to the steel X and the steel Y, and as a result, have reached the conclusion that the existence of oxide scale having a Cr concentration of not lower than 30 % by mass on the steel material surface near the back bead (steel basis material surface in the area in which the maximum ultimate temperature is higher than 800°C) is advantageous for maintaining high corrosion resistance to hot water in the vicinity of the back bead. In the oxide scale, slight thickening of Si was observed, but no thickening of Al, Ti, Nb and others was recognized.

The composition of the ferrite stainless steel for use in the hot water tank of the invention is described below.

### [Steel Composition]

C and N are elements inevitable in steel. When the content of C and N therein is reduced, then steel may be soft and its workability increases, and in addition, the formation of carbide and nitride may decrease and the weldability and the corrosion resistance of the welded region may be better. Accordingly, the C content and the N content are preferably lower, and the content of C and N is limited to at most 0.025 % each. More preferably, C and N are at most 0.015 % by mass each.

Si is an element useful in refining and casting as a deoxidizer; however, if it is too much therein, steel may be hard, therefore causing actual problems of promoted high-temperature cracking at the welded region, reduction in the toughness of the welded region and promoted corrosion of the welded region. In particular, for the material for hot water tanks, it is important to maintain the corrosion resistance of the welded region, and to that effect, the Si content is limited to at most 1 %. As promoting corrosion, the uppermost limit is 1 %. In case where also the workability and the weldability are considered important, the Si content is preferably limited to at most 0.4 % by mass.

Mn bonds to S existing as an impurity in steel, therefore forming chemically unstable MnS to lower the corrosion resistance. In addition, Mn solution is also a factor to detract from the corrosion resistance. Accordingly, the Mn content is preferably lower, and is limited to be at most 1 % by mass. The Mn content is more preferably at most 0.5 % by mass, even more preferably at most 0.3 % by mass.

P is preferably lower, as interfering with the toughness of the mother material and the welded region, but its content of up to 0.045 % by mass is allowable.

S forms MnS to be a starting point of pitting corrosion, and this interferes with corrosion resistance; but, it does not have an action of promoting the growth of pitting corrosion. However, since it has a negative influence on the high-temperature cracking at the welded region, its content is preferably lower. Accordingly, the S content is limited to be at most 0.01 % by mass.

Ni, when suitably added to steel having a Cr content of more than 21 % by mass, acts to increase the Cr concentration in the oxide scale and the Cr concentration just below the oxide scale. In addition, Ni acts to prevent the promotion of corrosion. In case where the oxide scale in the welded region melts out and a fresh metal surface (not coated with a passivated film) is exposed out, Ni exhibits its action to inhibit the metal from melting out and is expected to contribute toward the formation of a passivated film with Cr. In addition, the element Ni is effective for enhancing the toughness of ferrite stainless steel. For exhibiting these effects, the content of Ni must be at least 0.1 % by mass. However, too much Ni may worsen the mechanical properties of steel and interferes with the workability thereof, and therefore the uppermost limit of the Ni content is 1 by mass %.

Cr is an element of constituting a passivated film, and generally it enhances the local corrosion resistance such as pitting corrosion resistance and crevice corrosion resistance, and its effect of enhancing corrosion resistance increases with increase in the Cr content. For maintaining the corrosion resistance in a hot water environment of the TIG-welded back side formed by not using back gas sealing at a problemless level, it is important that the Cr concentration in the region at a depth of at least 10 nm of the steel basis material surface area of the weld heat-affected zone is at least 16 % by mass, as so mentioned in the above. Various investigations have revealed that, for stably maintaining the Cr concentration in the above-mentioned region to be at least 16 % by mass, it is extremely effective to make the Cr content in steel more than 21 % by mass. However, when the Cr content is too large, then the producibility and the mechanical properties (especially toughness) of steel may lower and the production cost thereof may increase. In consideration of the service environment for the TIG-welded structure-having hot water tank of the invention, the Cr content may be from more than 21 to 25 % by mass, more preferably from 23 to 25 % by mass.

Mo is an element effective for enhancing the corrosion resistance generally along with Cr. When the Cr amount is low, then Mo could not sufficiently exhibit its corrosion resistance-enhancing effect; however, since the growth of the corrosion generated in the heat-affected zone on the TIG-welded back side goes on to the site remote from the steel basis material/oxide scale interface, the Cr concentration is nearly the same as the added Cr amount at the growth point, and the Cr concentration is satisfactory for making Mo exhibit its intrinsic corrosion resistance-enhancing effect. In consideration of the hot water environment of tap water, when the Mo content is less than 0.1 % by mass, then the corrosion resistance-enhancing effect may be small. On the other hand, the Mo content of more than 2 % by mass may lower the workability and may bring about cost increase. Accordingly, the Mo content is from 0.1 to 2 % by mass.

Cu acts to increase the pitting corrosion potential of ferrite stainless steel and to retard corrosion promotion. Specifically, in case where the oxide scale melts out and a fresh surface is exposed out, Cu inhibits the metal from melting out, and like Ni, it contributes toward the formation of a passivated film with Cr; and accordingly in the invention, Cu is optionally added to steel. For making Cu exhibit above-mentioned its effect sufficiently, the Cu content is more effectively at least 0.1 % by mass. However, excessive Cu may be a factor of rather promoting corrosion, and therefore Cu, if added, is within a range of at most 1 % by mass.

Ti and Nb have strong affinity to C and N, and are elements effective for preventing intergranular corrosion that is problematic in ferrite stainless steel. For sufficiently attaining the effect, at least one of Ti of at least 0.05 % by mass and Nb of at least 0.05 % by mass must be incorporated in steel. However, too much Ti, if any, may worsen the surface quality and the weldability of the material; and too much Nb, if any, may cause high-temperature cracking in welding and may lower the toughness of the welded region. Accordingly, the Ti content is within a range of at most 0.4 % by mass and the Nb content is at most 0.5 % by mass.

Al, when added along with Ti, forms an Al oxide film on the weld surface area to be sealed with Ar gas on the welding torch side, therefore preventing the Cr oxide loss and reducing the reduction in the corrosion resistance. In case where the Al content is less than 0.02 % by mass, then an effective Al oxide film could not be formed. On the other hand, when the Al content is more than 0.3 % by mass, then the surface quality and the weldability of the material may lower. Accordingly, the Al content is from 0.02 to 0.3 % by mass.

### [Production of Hot Water Tank]

A stainless steel sheet having the above-mentioned composition is produced according to an ordinary stainless steel sheet producing process to give a cold-rolled annealed steel sheet having a thickness of approximately from 0.6 to 1.5 mm or so. For the surface finishing, it may be washed with acid. The steel sheet is shaped and worked to produce cylinder members (e.g., upper and lower end plates and shell plate) of a hot water tank, and these members are TIG-welded to each other to construct a hot water tank of the invention. However, the welding process comprises a TIG-welding step with no back gas sealing to form a back bead in the inner surface of the tank, at least as the final welding step of bonding the cylinder members to each other. Accordingly, the final welding to produce the closed condition of the tank except a flange part can be attained with a torch disposed on the outer surface of the tank with no back gas sealing on the inner surface of the tank, and therefore, ac compared with a conventional production method that requires back gas sealing on the inner surface, the operability of the method of the invention is significantly improved. In addition, Ar for back gas sealing is unnecessary, and the flange necessary only for back gas sealing is also unnecessary. The hot water tank of the invention thus produced in the manner as above has high cost performance, as compared with conventional ones. In addition, the hot water tank of the invention may have a simple structure not having a flange not for a watercourse for water (including hot water) and not for an insert port for electric communication members, and this embodiment is free from a problem of corrosion resistance depression in such an unnecessary flange area and may have further higher reliability.

### EXAMPLES

### [Example 1]

Stainless steel having a chemical composition shown in Table 2 was produced as an ingot, and then hot-rolled into a hot-rolled sheet having a thickness of 3 mm. Next, this was cold-rolled to a thickness of 1.0 mm, then annealed for finishing at 980 to 1050°C, and washed with acid to be a sample sheet. In Table 2, Steels 1 to 3 are hot water tank materials falling within the composition range defined in the invention. Steel 4 is SUS444 of 18Cr-2Mo; and Steel 5 is SUS445J1 of 22Cr-1Mo. The production history is common to all of these.

**Table 2**

| Group | Steel | Chemical Ingredients (mas.%) | | | | | | | | | | | | | Remarks |
|---|---|---|---|---|---|---|---|---|---|---|---|---|---|---|---|
| | | C | Si | Mn | P | S | Ni | Cr | Mo | Cu | Ti | Nb | Al | N | |
| Samples of the Invention | 1 | 0.007 | 0.15 | 0.12 | 0.038 | 0.001 | 1.02 | 21.2 | 1.17 | - | - | 0.40 | 0.08 | 0.007 | |
| | 2 | 0.008 | 0.30 | 0.18 | 0.030 | 0.001 | 0.49 | 23.9 | 0.50 | - | 0.35 | - | 0.06 | 0.012 | |
| | 3 | 0.013 | 0.38 | 0.22 | 0.035 | 0.001 | 0.52 | 24.2 | 0.51 | 0.50 | 0.20 | 0.18 | 0.12 | 0.013 | |
| Comparative Samples | 4 | 0.008 | 0.45 | 0.19 | 0.036 | 0.003 | 0.09 | 18.3 | 1.86 | - | - | 0.43 | 0.09 | 0.009 | SUS 444 |
| | 5 | 0.006 | 0.47 | 0.22 | 0.025 | 0.002 | 0.04 | 22.3 | 0.95 | - | 0.17 | 0.18 | 0.10 | 0.008 | SUS 445J1 |

Steel sheets of each sample material were welded together in a mode of TIG dressing under the condition of no back gas sealing, thereby preparing TIG-welded samples. From the TIG-welded samples, prepared were test pieces for observing the cross section thereof, at the position of 5 mm from the weld bond in the weld heat-affected zone on the welded back side (at the position corresponding to a maximum ultimate temperature of about 500°C); and these were analyzed for the Cr concentration in the steel basis surface layer area. For the analysis, employed was the above-mentioned method of TEM-EDX. However, within the range of the distance of from 1 nm (just below the oxide scale) to 20 nm from the steel basis material/oxide scale interface, the test points in the depth direction were further increased than those of the samples of the above-mentioned steel X and steel Y and their data were collected. Data of 10 points in total were collected at different sites having the same depth. Of the test points having a Cr concentration of less than 16 % by mass, the distance to the test point having the longest distance from the steel basis material/oxide scale interface was referred to as "the depth having a Cr concentration of less than 16 % by mass". Table 3 shows the Cr concentration just below the oxide scale (having a depth of 1 nm), and the depth having a Cr concentration of less than 16 % by mass. The Cr concentration just below the oxide scale indicates the range of the found data of 10 test points.

From the TIG-welded samples, prepared were test pieces for observing the cross section thereof, at the position of 2 mm from the weld bond in the weld heat-affected zone on the welded back side (at the position corresponding to a maximum ultimate temperature of about 1000°C) ; and these were analyzed for the Cr concentration. For the analysis, employed was the above-mentioned method of TEM-EDX. The test point was at a distance of about 10 nm from the steel basis material/oxide scale interface, and 10 points were tested. Of the found data of those 10 points, the lowest Cr concentration was employed as the Cr concentration in the oxide scale. As a result, it was confirmed that all the tested steel species had a Cr concentration of at least 30 % by mass.

**Table 3**

| Group | Steel | Cr Concentration just below oxide scale (mas.%) | Depth having Cr concentration of less than 16 % (nm) |
|---|---|---|---|
| Samples of the Invention | 1 | 15-18 | 5 |
| | 2 | 20-22 | 0 |
| | 3 | 21-24 | 0 |
| Comparative Samples | 4 | 13-15 | 15 |
| | 5 | 15 | 12 |

As in Table 3, in the samples of the invention, the depth having a Cr concentration of less than 16 % by mass was smaller than 10 nm in the steel basis material surface layer area in the site corresponding to a maximum ultimate temperature of 500°C in which the corrosion resistance depression could be the largest. As opposed to these, the Cr concentration just below the oxide scale was low in the comparative samples, Steel 4 and Steel 5, and even at a depth of 10 nm, the comparative samples could not maintain a Cr concentration of at least 16 % by mass. The reason may be because the Cr content of Steel 4 is 18.3 % by mass and is low, and the Ni content of Steel 5 is low.

### [Example 2]

A large section of 15 mm × 40 mm and a small section of 15 mm × 25 mm were cut out of each steel sample sheet (cold-rolled, annealed, acid-pickled steel sheet having a thickness of 1 mm) produced in Example 1, and were TIG-welded into a weld crevice test piece having the structure graphically shown in Fig. 5. Concretely, the small section was bent at around one short side thereof, then this was so positioned that its bent short side could be in the center of the sheet surface of the large section, and under the condition that a crevice could be formed in the overlapping part of the two sections, these were TIG-welded. In this step, a torch was so positioned that it could be on the opposite side of the small section via the large section therebetween, and that the Ar gas jetting out from the torch could not reach the crevice area. Back gas sealing was not applied to this case.

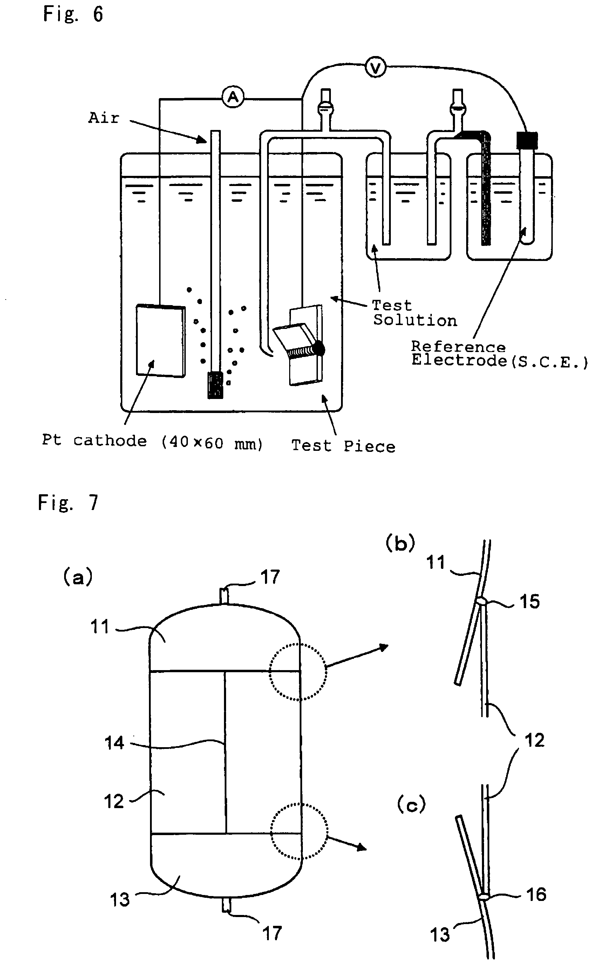

The TIG-welded test sample was dipped in an aqueous 2000-ppm Cl⁻ solution at 80°C for 30 days. The system constitution in this stage is as in Fig. 6. A Pt assistant cathode for accelerating the corrosion was connected to the test piece. In this case, the cathode capacity corresponds to a hot water shell having a volume of 300 L (liters). During the test, the corrosion current was monitored. After the dip test, the test sample was taken apart to the constitutive sections, and the corrosion depth at the site having formed the crevice between the large section and the small section was measured according to a focal depth method using an optical microscope. The largest corrosion depth of the found data is the "crevice corrosion depth" of the tested steel species. The result is shown in Table 4.

**Table 4**

| Group | Steel | Corrosion Current^{*1} | Crevice Corrosion Depth (mm) | Conclusion |
|---|---|---|---|---|
| Samples of the Invention | 1 | B | 0.08 | repassivated |
| | 2 | A | 0.06 | repassivated |
| | 3 | A | 0.04 | repassivated |
| Comparative Samples | 4 | B | 0.28 | possibility of growth |
| | 5 | B | 0.15 | possibility of growth |

| | | | | |
|---|---|---|---|---|
| (*1 Note) A: Corrosion current disappeared within 7 days (at most 1 µA). B: Corrosion current disappeared within 30 days (at most 1 µA). C: Corrosion current continues after the passage of 30 days (more than 1 µA). | | | | |

As in Table 4, the corrosion current became at most 1 µA within 30 days in every steel species, and in fact, the corrosion current disappeared. However, there was found a difference in the crevice corrosion depth. Specifically, the crevice corrosion depth in the samples of the invention, Steel 1 to Steel 3 was at most 0.1 mm and was shallow, and this may be because the corrosion could be prevented by repassivation. On the other hand, in the comparative samples, Steel 4 (SUS444) and Steel 5 (SUS445J1), the crevice corrosion depth was more than 0. 1 mm, and there may be a possibility of corrosion growth therein. The difference in the corrosion resistance may be caused by the difference in the Cr concentration distribution in the steel basis material surface layer area in the heat-affected zone on the TIG-welded back side with no back gas sealing (see Example 1). Regarding the ability to improve the corrosion resistance in the weld heat-affected zone, Mo is practically ineffective.

### [Example 3]

For investigating the corrosion resistance of the welded area in actual articles, hot water tanks were produced experimentally, using the above-mentioned Steel 3, a sample of the invention, and the above-mentioned Steel 4 (SUS444), a comparative sample. Fig. 7 graphically shows the structure of the hot water tank. Fig. 7 (a) shows the outward appearance of a test drum. The test drum has a structure comprising an upper end plate 11, a shell plate 12 and a lower end plate 13, as TIG-welded to each other, and is shaped like a barrel having a height of 1430 mm, a width of 520 mm and a volume of 300 L. The shell plate 12 was formed by TIG-welding the edges of a cylindrically-curved steel sheet to each other, having a welded area 14. A mouthpiece 17 is bonded to the upper end plate 11 and to a lower end plate 13. Apart from these, the tank does not have any other flange, therefore having a simple structure. For the members of the upper end plate 11, the shell plate 12 and the lower end plate 13, used was the above-mentioned test steel (the same steel species for all the upper end plate 11, the shell plate 12 and the lower end plate 13). Fig. 7(b) graphically shows the structure of a cross section of the welded area of the upper end plate 11 and the shell plate 12. Fig. 7(c) graphically shows the structure of a cross section of the welded area of the lower end plate 13 and the shell plate 12. In these welded areas 15 and 16, the edge of the end plate material projected into the inside of the tank, therefore forming a weld crevice. In welding into the welded areas 14, 15 and 16 a torch was disposed on the outer surface of the tank, and with no back gas sealing, the members were TIG-welded under the condition of forming a back bead on the inner surface of the tank. As a filler metal, used was SUS316L.

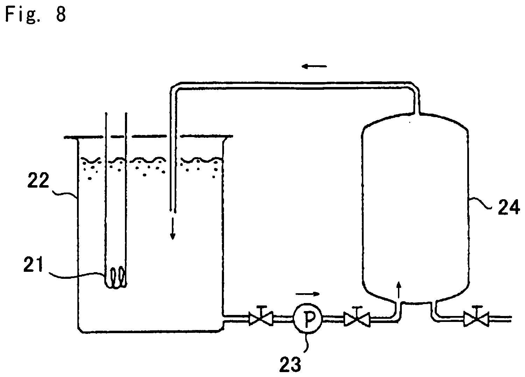

Fig. 8 graphically shows a corrosion resistance test method on as actual tank. In a test solution drum 22, a test solution is heated with a heater 21 up to 80°C, and via a feeding pump 23, the test solution is fed into a test tank 24 through its lower mouthpiece all the time at a flow rate of 10 L/min. Under the condition, the test was continued for 2 months in total. Each welded area of the test tank 24 was kept as such with no maintenance given thereto, and in the welded areas 14, 15 and 16, the weld on the back bead side formed through welding with no back gas sealing were kept exposed to the test solution. The test solution was prepared by adding, as an oxidizing agent, 2 ppm of Cu²⁺ to an aqueous 2000 ppm Cl⁻ solution collected from the tap water in Shunan city in Yamaguchi prefecture. Cu²⁺ at this concentration has an oxidizing power nearly comparable to the residual chlorine in hot water, but with the progress of corrosion, its concentration decreases, and therefore, the solution was renewed .every 7th day. Cl⁻ was controlled with NaCl; and Cu²⁺ was with a reagent CuCl₂·2H₂O. The solution temperature was so controlled that it could be 80°C in the test solution drum 22 having a capacity of 300 L. After the test, the tank 24 was broken up, and the welded areas 14, 15 and 16 were analyzed for corrosion. The result is shown in Table 5.

**Table 5**

| Group | No. | Checked Area | Corrosion | - Remarks |
|---|---|---|---|---|
| Sample of the Invention | 3 | shell plate/shell plate (welded area 14) | A | |
| | | upper end plate/shell plate(welded area 15) | A | |
| | | lower end plate/shell plate (welded area 16) | A | |
| Comparative Sample | 4 | shell plate /shell plate (welded area 14) | A | SUS444 |
| | | upper end plate/shell plate(welded area 15) | B | |
| | | lower end plate/shell plate(welded area 16) | D | |

### -Evaluation of Corrosion Condition-

A: No corrosion.
B: Minor corrosion (corrosion depth, at most 0.1 mm).
C: Severe corrosion (corrosion depth, more than 0.1 mm).
D: Penetration corrosion.

The hot water tank of the invention, as experimentally produced by the use of steel 3 had no corrosion at all in the weld crevice-forming area between the end plates and the shell plate, which is considered most problematic in point of corrosion, in the corrosion test of two months. On the other hand, the hot water tank of the comparative sample, as experimentally produced by the use of Steel 4 (SUS444), was corroded to penetration through the steel wall in the weld crevice-forming area between the shell plate and the lower end plate, and the back side thereof, as TIG-welded with back gas sealing, could not maintain good corrosion resistance.

## Claims

1. A hot water tank having, on the inner surface thereof, a back bead formed by TIG-welding of steel members (11, 12, 13) having a Cr content of from more than 21 to 25 % by mass to each other with no back gas sealing, **characterised in that** the Cr concentration in the steel basis material in the area having oxide scale soluble in an aqueous chloride solution, as formed therein in the heat-affected zone on the TIG-welded back side thereof, is at least 16 % by mass in the depth region of at least 10 nm from the steel basis material/oxide scale interface.

2. The hot water tank as claimed in claim 1, having, on the inner surface thereof, a back bead formed by TIG-welding with no back gas sealing of steel members to each other having a composition consisting of in % by mass, C: at most 0.025 %, Si: at most 1 %, Mn: at most 1 %, P: at most 0.045 %, S: at most 0.01 %, Ni: from 0.1 to 1 %, Cr: from more than 21 to 25 %, Mo: from 0.1 to 2 %, Al: from 0.02 to 0.3 %, N: at most 0.025 %, and containing at least one of Ti: from 0.05 to 0.4 % and Nb: from 0.05 to 0.5 %, and optionally Cu: at most 1%, with the balance of Fe and inevitable impurities.

3. The hot water tank as claimed in any of claims 1 or 2, which has oxide scale having a Cr concentration of at least 30 % by mass on the steel material surface near the back bead.

4. The hot water tank of any of claims 1 to 3, which has a structure so designed as not to have a flange not for a watercourse for water, including hot water, and not for an insert port for electric communication members.

## Patentansprüche

1. Warmwassertank, an dessen Innenfläche eine hintere Wulst ist, die durch TIG-Schweißen ohne Pintergas bzw. Schutzgasabdeckung von Stahlgliedern (11, 12, 13) mit einem Cr-Gehalt von mehr als 21 bis 25 Massen-% aneinander geformt wurde, **dadurch gekennzeichnet, dass** die Cr-Konzentration in dem Stahlbasismaterial in dem Bereich, der Oxydzunder bzw. eine Oxydhaut, die in einer wässrigen Chloridlösung lösbar ist, wie dort in der wärmebeeinflussten Zone an der TIG geschweißten Rückseite davon geformt hat, zumindest 16 Massen-% in der Tiefenregion von mindestens 10 nm von der Stahlbasismaterial/Oxydhaut-Schnittstelle ist.

2. Warmwassertank nach Anspruch 1, der an seiner Innenfläche eine hintere Wulst hat, die die durch TIG-Schweißen ohne Schutzgasabdeckung von Stahlgliedern aneinander geformt ist, welche eine Zusammensetzung haben, die in Massen-% aus Folgendem bestehen:
C: höchstens 0,025 %, Si: höchstens 1 %, Mn: höchstens 1 %, P: höchstens 0,045 %, S: höchstens 0,01 %, Ni: von 0,1 bis 1 %, Cr: von mehr als 21 bis 25 %, Mo: von 0,1 bis 2 %, Al: von 0,02 bis 0,3 %, N: höchstens 0,025 %, und die zumindest eines von Folgenden enthalten: Ti: von 0,05 bis 0,4 % und Nb: von 0,05 bis 0,5 %, und optional Cu: höchstens mit 1 %, wobei der Rest Fe und unvermeidbare Verunreinigungen ist.

3. Warmwassertank nach einem der Ansprüche 1 oder 2, der eine Oxydhaut mit einer Cr-Konzentration von mindestens 30 Massen-% an der Stahlmaterialoberfläche nahe der hinteren Wulst hat.

4. Warmwassertank nach einem der Ansprüche 1 bis 3, der eine Struktur hat, die so ausgelegt ist, dass sie keinen Flansch für einen Wasserkreislauf für Wasser, einschließlich heißem Wasser, und keinen Einlassanschluss für elektrische Verbindungsglieder hat.

## Revendications

1. Réservoir d'eau chaude comportant, sur sa surface intérieure, un bourrelet arrière formé en soudant entre eux par soudage TIG des éléments d'acier (11, 12, 13) ayant un contenu en Cr compris entre plus de 21 % et 25 % en masse, sans protection gazeuse à l'arrière, **caractérisé en ce que**
la concentration en Cr dans le matériau de base d'acier dans la région comportant des écailles d'oxyde solubles dans une solution aqueuse de chlorure, telles que formées dans la zone affectée par la chaleur sur le côté arrière soudé par TIG, est d'au moins 16 % en masse dans la région profonde d'au moins 10 nm par rapport à l'interface entre le matériau de base d'acier et les écailles d'oxyde.

2. Réservoir d'eau chaude selon la revendication 1, comportant, sur sa surface intérieure, un bourrelet arrière formé en soudant entre eux, par soudage TIG et sans protection gazeuse à l'arrière, des éléments d'acier, ayant une composition constituée en % en masse, de C : au plus 0,025 %, Si : au plus 1 %, Mn : au plus 1 %, P : au plus 0,045 %, S : au plus 0,01 %, Ni : de 0,1 à 1 %, Cr : de plus de 21 % à 25 %, Mo : de 0,1 à 2 %, Al : de 0,02 à 0,3 %, N : au plus 0,025 %, et contenant au moins l'un de Ti : de 0,05 à 0,4 % et Nb : de 0,05 à 0,5 %, et optionnellement Cu : au plus 1 %, le reste étant constitué de Fe et d'inévitables impuretés.

3. Réservoir d'eau chaude selon l'une quelconque des revendications 1 ou 2, qui comporte des écailles d'oxyde ayant une concentration en Cr d'au moins 30 % en masse sur la surface du matériau d'acier à proximité du bourrelet arrière.

4. Réservoir d'eau chaude selon l'une quelconque des revendications 1 à 3, ayant une structure conçue de manière à ne pas avoir de bride qui ne soit pas pour un passage d'eau, y compris pour de l'eau chaude, et qui ne soit pas pour un accès d'insertion pour des éléments de communication électrique.
